# EUROPÄISCHE PATENTSCHRIFT

(11) **EP 2 244 960 B1**
(45) Veröffentlichungstag und Bekanntmachung des Hinweises auf die Patenterteilung: **05.10.2011**
(21) Anmeldenummer: 09705546.1
(22) Anmeldetag: 27.01.2009
(51) Int. Cl.: B65G 49/06

(54) **PORTALUMSETZER FÜR GROSSFLÄCHIGE GLASPLATTEN**
PORTAL RE-POSITIONING DEVICE FOR LARGE-AREA GLASS PLATES
PORTIQUE DE TRANSFERT POUR PLAQUES DE VERRE DE GRANDE SURFACE

(30) Priorität: 31.01.2008 DE 102008006956
(43) Veröffentlichungstag der Anmeldung: 03.11.2010
(73) Patentinhaber: Grenzebach Maschinenbau GmbH, 86663 Asbach-Bäumenheim (DE)
(72) Erfinder: FRANZ, Roland, 86681 Fünfstetten (DE)
(74) Vertreter: Karl, Frank
(86) Internationale Anmeldenummer: PCT/DE2009/000106
(87) Internationale Veröffentlichungsnummer: WO 2009/094995

(56) Entgegenhaltungen:
- DE-A1- 3 047 593
- DE-A1- 3 518 640
- DE-U1- 9 318 902
- DE-U1- 20 102 520
- US-A- 4 400 841
- US-A1- 2006 099 064

## Beschreibung

Die vorliegende Erfindung betrifft eine Vorrichtung und ein Verfahren zum Verändern der Lage von ruhenden oder sich bewegenden großflächigen Glasplatten, sowie ein Computerprogramm und einen maschinenlesbaren Träger zur Durchführung des Verfahrens

Die Herstellung von Floatglas erfolgt durch das fortlaufende Ausgießen der Glasschmelze auf einem in einer länglichen Wanne erhitzten Zinnbad und das sich hieraus ergebende Glasband.

Das anschließende Konfektionieren von Floatglas geschieht durch Längsschneiden und Querschneiden des aus der Floatglasfertigung mit einer bestimmten Vorschubgeschwindigkeit laufenden Glasbandes. Das Längsschneiden bewirken hierbei in entsprechender Position über dem Glasband stationär installierte Längsschneidräder und das Querschneiden erfolgt mit Hilfe von Schneidbrücken und daran quer über das Glasband bewegten Querschneidrädern.

Auf diese Weise können Glasplatten von beträchtlicher Größe hergestellt werden. Als so genanntes Bandmaß oder PLF wird hierbei eine Größe von 6 Meter mal 3,21 Meter bezeichnet. Als so genanntes geteiltes Bandmaß oder DLF wird eine Plattengröße von 3,21 Meter mal 2 Meter ( bis 2,5 Meter ) bezeichnet.

Um Glasplatten von solcher Größe bruchfrei von einem Ort zu einem anderen zu transportieren, werden hierzu Haltemechanismen, meist in der Form eines in sich stabilen Rahmens, an die betreffende Glasplatte heran bewegt, mit diesem über Saugnäpfe verbunden und dann wird der Haltemechanismus mit der daran angesaugten Glasplatte weiter befördert.

Im Prinzip ist das derselbe Vorgang wie er beim händischen Transport kleinerer Glasplatten mittels Handgriffen in Verbindung mit Saugnäpfen erfolgt.

Aus dem Stand der Technik ist aus der DE 197 12 368 A1 ein Verfahren zum Versetzen von Gegenständen von einer ersten Stelle zu einer zweiten Stelle unter Verwendung eines den Gegenstand während des Versetzens an sich bindenden Haltemechanismus bekannt, bei dem die Aufgabe gelöst werden soll, dieses Verfahren derart weiterzubilden, dass auf einfache Weise ein unter allen Umständen sicheres Versetzen von Gegenständen durchgeführt werden kann. Als zu versetzende Gegenstände werden dabei Glasscheiben genannt. Die Lösung dieser Aufgabe wird, gemäß den Angaben im Kennzeichen des Anspruchs 1, dadurch gelöst, dass das Heranfahren des Haltemechanismus an den zu versetzenden Gegenstand an die erste oder die zweite Stelle unter

Berücksichtigung der tatsächlichen Lage und / oder Ausrichtung derselben erfolgt, wobei der Haltemechanismus bei Bedarf unter Ausnutzung einer freien Drehbarkeit und / oder Schwenkbarkeit desselben um eine oder mehrere Achsen ausgerichtet wird.
Im weiter beanspruchten Vorrichtungsanspruch 7 wird näher erläutert, dass der zu versetzende Gegenstand eine Glasscheibe, die erste Stelle ein Inlader - Gestell, die zweite Stelle ein Förderband, und der Haltemechanismus ein Saugrahmen ist.
Des Weiteren wird noch in Verbindung mit dem Haltemechanismus auf Signalisierungseinrichtungen, Entkopplungseinrichtungen, eine Erfassungseinrichtung und eine Steuereinrichtung verwiesen.
Eine Offenbarung einer konkreten Ausgestaltung besonderer Mittel zum schnellen, sicheren Erfassen und einer schnellen Aufnahme sehr großer Glasplatten findet sich in dieser Druckschrift jedoch nicht.

In der DE 10 2005 060 452 A1 wird im Oberbegriff des Anspruchs 1 ausgegangen von einer Handhabungsvorrichtung für Flachmaterialien umfassend einen Tragrahmen mit mindestens einem Saugrahmen mit, in einer Tragfläche angeordneten, evakuierbaren Saugköpfen zum Aufnehmen von ansaugbaren Flachmaterialien.
Bei einer solchen Vorrichtung soll, nach den Angaben in dieser Druckschrift, die Aufgabe gelöst werden, eine Handhabungsvorrichtung für Flachmaterialien bereitzustellen, die verschiedene Formate als auch beispielsweise beschichtete und unbeschichtete Flachmaterialien alternativ handhaben kann und dabei konstruktiv möglichst einfach gestaltet ist.
Die Erfindung, bzw. die Lösung dieser Aufgabe, besteht in diesem Fall darin, dass der Tragrahmen zwischen einer im Wesentlichen vertikalen Position und einer im Wesentlichen horizontalen Position der Tragfläche verschwenkbar ist, wobei die Tragfläche wahlweise in eine horizontale Position mit nach oben oder eine horizontale Position mit nach unten weisenden Saugköpfen verschwenkbar ist.

Auch in dieser Druckschrift findet sich kein Hinweis auf eine konkrete Ausgestaltung besonderer Mittel zum schnellen, sicheren Erfassen und einer schnellen Aufnahme sehr großer Glasplatten.

Aus der DE 201 02 520 U1 ist eine Lageranlage für hochkant stehende, große Platten mit Lagereinheiten und einer Transporteinrichtung bekannt, die im Wesentlichen aus einem Lagergestell mit einem Rahmen zur Aufnahme der Platten besteht.

Aus der US 4 400 841 A sind eine Vorrichtung und ein Verfahren zum Transport von horizontal gelagerten Glasplatten bekannt, die in einer Produktionslinie an eine andere Position verbracht werden.

Aufgabe der vorliegenden Erfindung ist es daher, eine Vorrichtung, ein Verfahren, ein Computerprogramm sowie einen maschinenlesbaren Träger anzugeben, mit denen bei willkürlicher Lage großer Glasplatten auf der Fertigungslinie diese in kürzester Zeit erfasst, schwingungsfrei aufgenommen und sicher gestapelt werden können.

Diese Aufgabe wird hinsichtlich der Vorrichtung mit einem Portalumsetzer mit den Merkmalen des Anspruchs 1 , hinsichtlich des Verfahrens durch die Maßnahmen des Anspruchs 5, hinsichtlich des Computerprogramms durch die Merkmale des Anspruchs 8 und bezüglich des maschinenlesbaren Trägers durch die Merkmale des Anspruchs 9 gelöst.

In den Unteransprüchen sind weitere vorteilhafte Ausführungsbeispiele der Erfindung gekennzeichnet.

Im Folgenden wird die Erfindung anhand von Figuren näher beschrieben.
Es zeigen im Einzelnen:
- Fig.1:: eine perspektivische Darstellung der Gesamtvorrichtung
- Fig.2:: eine Schnittzeichnung durch die Gesamtvorrichtung
- Fig.3:: eine Detailzeichnung eines Saugers
- Fig.4:: eine Schnittzeichnung durch die Hubsäule

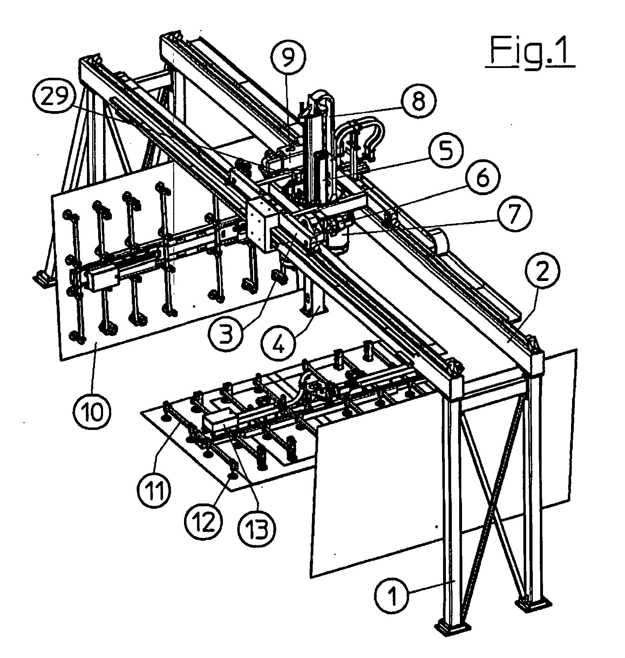

In der Fig.1 ist zu erkennen wie die Portalstützen ( 1 ), durch die weit spannenden Führungsträger ( 2 ) verbunden, gewissermaßen ein weites Portal bilden, das dem Portalumsetzer seinen Namen gegeben hat. Durch diese stabile Konstruktion ist gewährleistet, dass einerseits zwischen den Portalstützen ( 1 ) genügend Platz geschaffen ist, um auch sehr große Glasplatten ( 10 ) aufnehmen und dem gewünschten Stellplatz zuführen zu können, und andererseits die Positioniergenauigkeit des Säulenschlittens ( 3 ), der die Hubsäule ( 4 ) trägt, auch bei der Handhabung sehr großer und sehr schwerer Glasplatten ( 10 ) erhalten bleibt. Dies wird erfindungsgemäß besonders dadurch erreicht, dass das Gesamtgewicht, das sich aus dem Gewicht einer Glasplatte ( 10 ) und dem zusätzlichen Gewicht der diese haltenden Konstruktion nach der Art einer Waage ergibt, so kompensiert wird, dass lediglich das Gewicht der jeweiligen Glasplatte ( 10 ) als Steuerungsparameter zugrunde gelegt wird. Das Differenzgewicht zwischen dem Gesamtgewicht einer Glasplatte ( 10 ) und der diese erfassenden Vorrichtung, die im Wesentlichen aus den Saugern ( 12 ) und deren Tragekonstruktion besteht, wird durch die Steuerung von Druckluft im Gewichtsausgleich ( 5 ) bewirkt. Das heißt, dieses Differenzgewicht wird über einen Druckzylinder entsprechend dem Hebelgesetz auf der Gegenseite eines Hebelsystems aufgebracht und gleicht somit das Differenzgewicht aus. Auf diese Weise werden der Steuerung des Portalumsetzers die Belastungs - Parameter vermittelt, die dem tatsächlichen Gewicht und den Trägheitsmomenten der jeweils umzusetzenden Glasplatte ( 10 ) entsprechen.
Die für diesen Vorgang benötigte Druckluft wird im Druckluftbehätter ( 7 ) gespeichert. Insgesamt wird somit erreicht, dass die, die Bewegung einer bestimmten Glasplatte ( 10 ) übertragenden, Zahnriemen nicht unzulässig beansprucht werden. Zusätzlich wird erreicht, dass die Flanken der verwendeten Zahnriemen lediglich einseitig belastet werden und die Steuerung somit insgesamt sehr präzise erfolgen kann. Mit dieser Vorrichtung ist es natürlich auch möglich das Gewicht einer Glasplatte ( 10 ) quasi zu "überkompensieren" und diese für den Vorgang des Umsetzens leichter erscheinen zu lassen als deren tatsächlichem Gewicht entspricht. Eine solche Vorgehensweise mag im Einzelfall bei dem Umsetzen besonders schwerer Glasplatten ( 10 ) angezeigt erscheinen. Zu beachten ist dabei natürlich, dass das insgesamt für den Portalumsetzer zulässige Gesamtgewicht nicht überschritten wird.

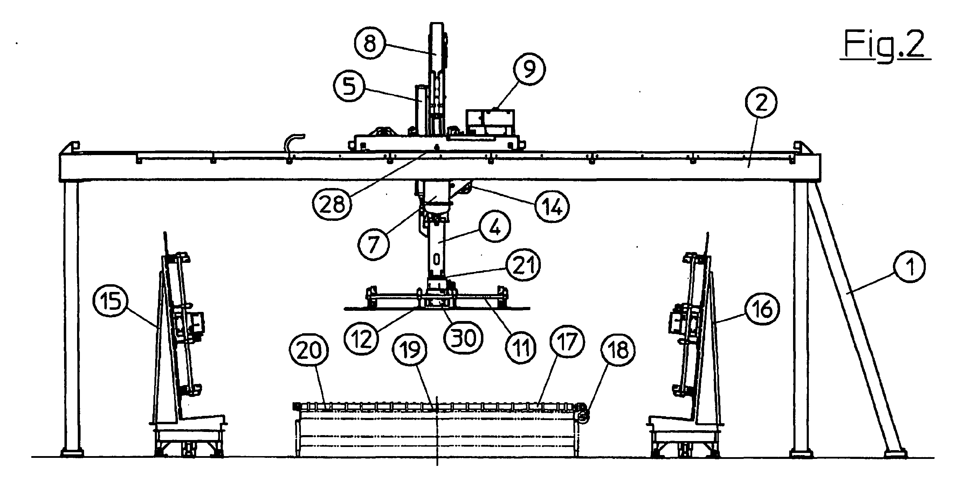

Der horizontal wirkende Schlittenantrieb ( 6 ) in Form eines Servomotors bewegt den Säulenschlitten ( 3 ). In dem Leitungskanal ( 8 ) verlaufen die Energiezuführung und Steuerungsmittel für die Hubsäule ( 4 ). Die Vakuumpumpe ( 9 ) liefert den für die jeweiligen Sauger ( 12 ) benötigten Unterdruck, wobei die Sauger ( 12 ) an den quer zum Rollenförderer verlaufenden Querträgern ( 11 ) befestigt sind. In dem aus der Fig.1 ersichtlichen Schaltkasten ( 13 ) im Bereich der vordersten Sauger ( 12 ) ist die elektrische Ausrüstung untergebracht. Weiter ist in der Fig.1 der Antrieb ( 29 ) für den in der Fig.2 gezeigten Drehkranz ( 28 ) zu erkennen. In horizontaler Lage ist in der Fig.1 ferner eine Glasplatte ( 10 ) in Verbindung mit einer Saugvorrichtung, jedoch ohne eine mechanische Verbindung mit einer Hubsäule ( 4 ) zur Demonstration der Lage bei der Aufnahme von Förderrollen ( 17 ) dargestellt.

Die genannten Einrichtungen sind zum großen Teil auch aus der Schnittzeichnung der Fig.2 zu ersehen. Zusätzlich ist hier der Säulenantrieb ( 14 ) zu erkennen, der in Form eines Servomotors die Vertikalbewegung der Hubsäule ( 4 ) ausführt.

Auf der linken Seite ist ein Stapelgestell ( 15 ) und auf der rechten Seite ein Stapelgestell ( 16 ) im Schnitt dargestellt.
In der Mitte ist die Lagerung für eine Glasplatte ( 10 ) mittels Förderrollen ( 17 ) die von einem Antrieb ( 18 ) angetrieben werden, eingezeichnet. Zur Erfassung der Abmessungen der jeweils umzusetzenden Glasplatte ( 10 ) dienen beispielhaft ein mittlerer Sensor ( 19 ) und ein äußerer Sensor ( 20 ). Zur zusätzlichen Erfassung der Geschwindigkeit der sich dem Portal mit einer bestimmten Geschwindigkeit nähernden Glasplatte ( 10 ) können noch weitere Sensoren im Bereich des Führungsträgers ( 2 ) dienen, die auf der Basis von Lasern und / oder Ultraschall arbeiten. Deren Ausgangssignale ermöglichen dann der Steuerungszentrale einen automatischen Zugriff des erfindungsgemäßen Portalumsetzers zu einem bestimmten Zeitpunkt, bzw. auf eine bestimmte Glasplatte ( 10 ).
Eine Dreh - und Schwenkvorrichtung ( 21 ) am unteren Ende der Hubsäule( 4 ) ermöglicht ein Drehen und / oder Schwenken der gesamten Saugervorrichtung um eine horizontale Achse in zwei entgegengesetzte Richtungen und dient im Wesentlichen dem Umsetzen der erfassten Glasplatte ( 10 ).

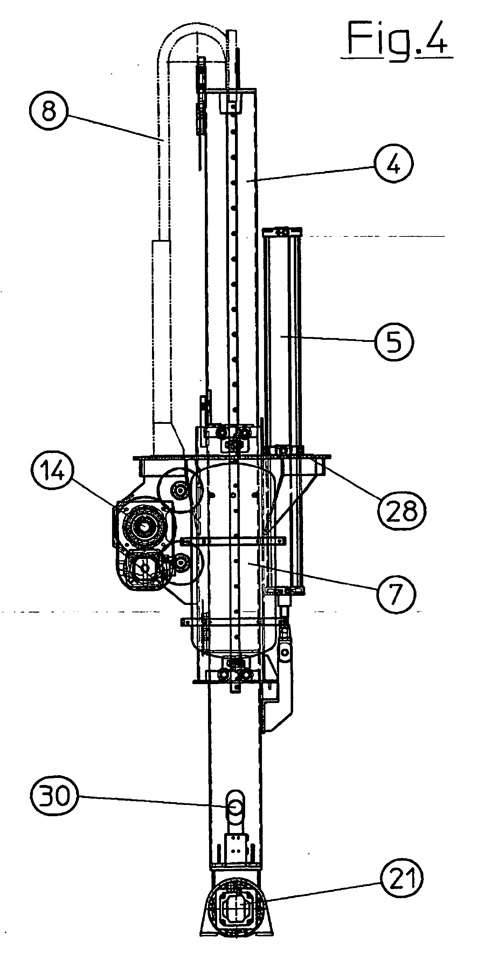

Die gesamte Hubsäule ( 4 ) lässt sich in der Verzahnung des Drehkranzes ( 28 ) drehen, wobei dieser durch den Antrieb ( 29 ), wie aus der Fig.1 ersichtlich, angetrieben wird. Der Drehkranz ( 28 ) ist detaillierter aus der Fig.4 zu ersehen.

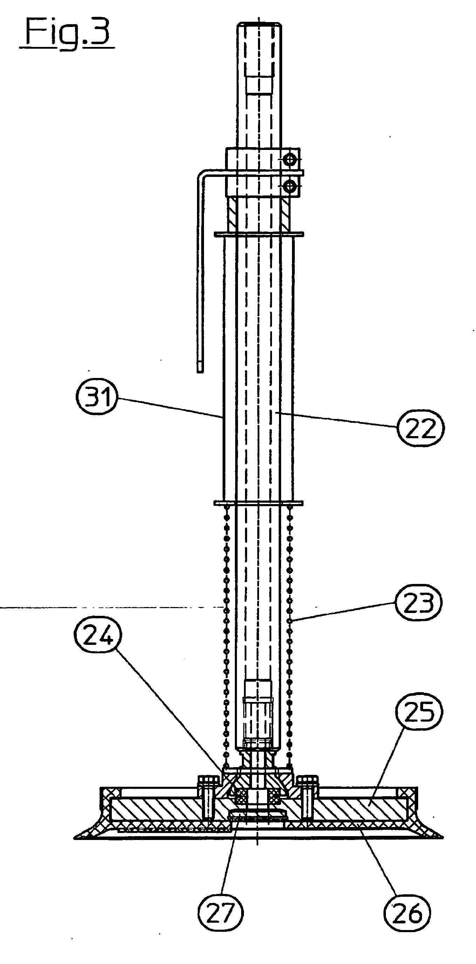

Der in der Detailzeichnung der Fig.3 gezeigte Sauger ( 12 ) besteht im Wesentlichen aus einem Saugerschaft ( 22 ) der in einem Führungs- und Halterungsrohr ( 31 ) steckt und aus einem an diesem befestigten Saugteller ( 25 ). Eine Ausgleichsfeder ( 23 ), die zwischen einem Führungs- und Halterungsrohr ( 31 ) und dem Saugteller ( 25 ) gelagert ist, sorgt einerseits für ein sanftes Aufsetzen des Saugtellers ( 25 ) auf der Glasplatte ( 10 ) und andererseits unterstützt sie bei einer Schrägstellung die flexible Saugtellerhalterung ( 24 ). Diese Saugtellerhalterung ( 24 ) ist aus einem weichen, aber gut stoßdämpfenden Material gefertigt und stellt eine besonders harmonische Verbindung zwischen dem Saugerschaft ( 22 ) und dem Saugerteller ( 25 ) dar. Die kreisförmige Saugermanschette ( 26 ) mit ihrer besonders haftfähigen Randlippe stellt die eigentliche Verbindung zu der Glasplatte ( 10 ) her. Der Saugteller ( 25 ) weist in seiner Mitte ein kreisförmiges Filterelement ( 27 ) auf. Dieses dient dem Zweck feine Glaspartikel von der Vakuumpumpe ( 9 ) fernzuhalten.
Es kann entweder von Hand gereinigt werden, oder in bestimmten Abständen ausgewechselt werden. Durch einen nicht extra gezeigten Sensor kann der Durchlasswiderstand des Filterelements ( 27 ) eines jeden Saugers ( 12 ) in einer besonderen Ausbaustufe erfasst und an einem Monitor angezeigt werden.
In einer weiteren Ausbaustufe kann es vorgesehen sein, dass zur Umsetzung besonders langer und schmaler Glasplatten ( 10 ), die schmäler sind als die Querträger ( 11 ) zulassen, einzelne Sauger ( 12 ) abschaltbar sind, beziehungsweise dass jeder Sauger ( 12 ) einzeln für sich mit einstellbarer Unterdruck - Luft beaufschlagt werden kann. Es hat sich gezeigt, dass für die schwingungsfreie Erfassung einer sehr großen Glasplatte die Anzahl und die genaue Lage der verwendeten Sauger ( 12 ) eine entscheidende Rolle spielen. Deshalb kann es erforderlich sein in Relation zu der umzusetzenden Glasplatte ( 10 ) eine bestimmte Konfiguration der Sauger ( 12 ) zu wählen. Hierzu muss jedoch jeder Sauger ( 12 ) wahlweise zuschaltbar sein.
Diese Variante stellt deshalb eine weitere, von der Lösung gemäß Anspruch 1 unabhängige Lösung der, der Erfindung zugrunde liegenden, Aufgabe dar.

Ferner kann es vorgesehen sein, dass mehrere erfindungsgemäße Portalumsetzer hintereinander angeordnet sind und einer gemeinsamen Steuerung unterworfen sind, oder einzeln ansteuerbar sind. Dies ermöglicht den Vorgang des Umsetzens entweder extrem langer Glasplatten ( 10 ) und / oder das selektive Umsetzen von Glasplatten ( 10 ) unterschiedlicher Abmessungen die aus einer Vielzahl von einfahrenden Glasplatten aussortiert werden können.

Die Schnittzeichnung durch die Hubsäule ( 4 ) gemäß der Fig. 4 zeigt noch einmal die bereits in ihrer Funktion beschriebenen Anlagenteile aus einer weiteren, detaillierter dargestellten Sicht. Der Vakuum - Schlauch ( 30 ), der aus dem unteren Teil der Hubsäule ( 4 ) zu den einzelnen Querträgern ( 11 ) mit den jeweiligen aufgesetzten Saugern ( 12 ) führt, besteht aus einem besonderen, für Roboteranlagen entwickelten, Material. Hierdurch ist eine hohe Zuverlässigkeit im Hinblick auf die wechselnde Kipp - und Drehbeanspruchung der Hebeeinrichtung gewährleistet.

Die interaktive Steuerung der Sauger ( 12 ) und der Elemente der Hubsäule ( 4 ) in Verbindung mit der Erfassung des Formats und der Dicke jeder Glasplatte ( 10 ),sowie die Überwachung der Positionierung über Laser und / oder Sensoren erfordert ein spezielles Steuerungsprogramm.

### Bezugszeichenliste

- ( 1 ): Portalstützen
- ( 2 ): Führungsträger, Fahrträger
- ( 3 ): Säulenschlitten, Fahrwagen
- ( 4 ): Hubsäule
- (5): Gewichtsausgleich, Ausgleichszylinder
- ( 6 ): Schlittenantrieb, Fahrwagenantrieb
- ( 7 ): Druckluftbehälter für Ausgleichszylinder
- ( 8 ): Leitungskanal für Hebeeinrichtung
- ( 9 ): Vakuumpumpe
- ( 10 ): Glasplatte
- ( 11 ): Querträger für Sauger, Verteilerrohr
- ( 12 ): Sauger
- ( 13 ): Schaltkasten
- ( 14 ): Säulenantrieb
- ( 15 ): linkes Stapelgestell
- ( 16 ): rechtes Stapelgestell
- ( 17 ): Förderrollen
- ( 18 ): Antrieb für Förderrollen
- ( 19 ): mittlerer Sensor ( 20 ) äußerer Sensor
- ( 21 ): Dreh - und Schwenkvorrichtung
- ( 22 ): Saugerschaft
- ( 23 ): Ausgleichsfeder
- ( 24 ): Flexible Saugtellerhalterung
- ( 25 ): Saugerteller
- ( 26 ): Saugermanschette
- ( 27 ): Filterelement
- ( 28 ): Drehkranz
- ( 29 ): Antrieb für Drehkranz
- ( 30 ): Spezialschlauch
- ( 31 ): Führungs - und Halterungsrohr

## Patentansprüche

1. Vorrichtung zum Verändern der Lage von ruhenden oder sich bewegenden großflächigen Glasplatten, insbesondere ein Portalumsetzer, mit den Merkmalen, dass die in der Lage zu verändernden Glasplatten (10) von einer oder mehreren, Dreh- und Schwenkvorrichtung(en) (21) in Verbindung mit einer, in einer ebenen Fläche angeordneten, Anzahl von Saugern (12) mittels Luft-Unterdruck erfasst und verbunden werden, wobei die Sauger (12) an einem Querträger (11) befestigt sind, dass die Vorrichtungen (21) mit einer Hubsäule (4) drehbar und schwenkbar verbunden sind, und dass die Vorrichtungen ( 21 ) im zu erfassenden Lagebereich der Glasplatten (10) horizontal verfahrbar sind, **dadurch gekennzeichnet, dass**
a) die Hubsäule (4) einen druckluftbeaufschlagten Gewichtsausgleich (5) zur Kompensation des zu bewegenden Gewichts der Vorrichtungen (21) aufweist,
b) die Teller (25) der Sauger (12) federbelastet in ihrer Halterung nach allen Richtungen kippbar und mit einem Filterelement (27) versehen sind, und
c) die Sauger (12) jeweils gesondert mit steuerbarem Unterdruck beaufschlagbar und wahlweise zuschaltbar sind.

2. Vorrichtung nach Anspruch 1, **dadurch gekennzeichnet, dass** die Lage und/oder die Geschwindigkeit der Glasplatten (10) von Sensoren erfasst und deren Signale steuerungstechnisch verarbeitet werden.

3. Vorrichtung nach einem der vorhergehenden Ansprüche, **dadurch gekennzeichnet, dass** der Gewichtsausgleich (5) stufenlos einstellbar ist.

4. Vorrichtung nach einem der vorhergehenden Ansprüche, **dadurch gekennzeichnet, dass** der Durchlasswiderstand eines Filterelements (27) erfasst und angezeigt wird.

5. Verfahren zum Verändern der Lage von ruhenden oder sich bewegenden großflächigen Glasplatten mit den folgenden Merkmalen:
a) die Abmessungen einer bestimmten Glasplatte (10) werden über Sensoren erfasst,
b) es wird die Geschwindigkeit der Glasplatte (10) und der Zeitpunkt des Kontakts einer Glasplatte (10) mit einer oder mehreren Vorrichtung(en) (21) ermittelt, wobei eine Vorrichtung (21) jeweils mit einer, in einer ebenen Fläche angeordneten Anzahl von Saugern (12) verbunden ist,
c) die Vorrichtungen (21) werden über Unterdruck mittels Saugern (12) mit der jeweiligen Glasplatte (10) verbunden, wobei die Konfiguration der verwendeten Sauger (12) in Relation zu der Größe der Glasplatte (10) durch das Zuschalten entsprechender Sauger (12) gewählt wird,
d) die jeweilige Glasplatte (10) wird entsprechend der bestehenden Anforderung mittels einer oder mehrerer Vorrichtungen (21) angehoben und verschwenkt, wobei über Gewichtsausgleich (5) das Gewicht der Vorrichtung relativiert wird, und
e) die Glasplatte (10) wird am Zielort abgesetzt und die Sauger (12) werden gelöst.

6. Verfahren nach Anspruch 5, **dadurch gekennzeichnet, dass** der Gewichtsausgleich (5) stufenlos einstellbar ist.

7. Verfahren nach Anspruch 5 oder 6, **dadurch gekennzeichnet, dass** mehrere Vorrichtungen hintereinander angeordnet sind und einer gemeinsamen Steuerung unterworfen sind.

8. Computerprogramm mit einem Programmcode zur Durchführung der Verfahrensschritte nach einem der Ansprüche 5 bis 7, wenn das Programm in einem Computer ausgeführt wird.

9. Maschinenlesbarer Träger mit dem Programmcode eines Computerprogramms zur Durchführung des Verfahrens nach einem der Ansprüche 5 bis 7, wenn das Programm in einem Computer ausgeführt wird.

## Claims

1. Device for changing the position of large-area glass plates which are stationary or moving, in particular a portal re-positioning device, having the features that the glass plates (10) that are to be changed in position are picked up and connected by one or more rotating and pivoting devices (21) together with a number of suckers (12), arranged in a level plane, by means of air under negative pressure, the suckers (12) being fastened to a transverse beam (11), that the devices (21) are connected in a rotatable and pivotable manner to a lifting column (4), and that the devices (21) can travel horizontally in the positional area of the glass plates (10) that is to be picked up, **characterized in that**
a) the lifting column (4) has a counterbalance weight (5) under compressed air to compensate for the weight of the devices (21) to be moved,
b) the disks (25) of the suckers (12) are capable of tilting in all directions under spring loading in their mount and are provided with a filter element (27) and the suckers (12) can each be separately subjected to controllable negative pressure and can be optionally switched on.

2. Device according to Claim 1, **characterized in that** the position and/or the speed of the glass plates (10) is/are picked up by sensors and signals thereof are processed by a control system.

3. Device according to one of the preceding claims, **characterized in that** the counterbalance weight (5) can be adjusted infinitely variably.

4. Device according to one of the preceding claims, **characterized in that** the flow resistance of a filter element (27) is picked up and displayed.

5. Method for changing the position of large-area glass plates which are stationary or moving, with the following features:
a) the dimensions of a specific glass plate (10) are picked up by means of sensors,
b) the speed of the glass plate (10) and the point in time of the contact of a glass plate (10) with one or more devices (21) are determined, a device (21) being respectively connected to a number of suckers (12) arranged in a level plane,
c) the devices (21) are connected to the respective glass plate (10) by negative pressure by means of suckers (12), the configuration of the suckers (12) used being chosen in relation to the size of the glass plate (10) by switching on the respective suckers (12),
d) the respective glass plate (10) is raised and pivoted in accordance with the present requirement by means of one or more devices (21), the weight of the device being relativized by means of a counterbalance weight (5), and
e) the glass plate (10) is set down at the target location and the suckers (12) are released.

6. Method according to Claim 5, **characterized in that** the counterbalance weight (5) can be adjusted infinitely variably.

7. Method according to Claim 5 or 6, **characterized in that** a number of devices are arranged one behind the other and undergo joint control.

8. Computer program with a program code for carrying out the method steps according to one of Claims 5 to 7 when the program is executed in a computer.

9. Machine-readable carrier with the program code of a computer program for carrying out the method according to one of Claims 5 to 7 when the program is executed in a computer.

## Revendications

1. Dispositif pour changer la position de plaques de verre de grande surface au repos ou en mouvement, en particulier portique de transfert, avec les caractéristiques que les plaques de verre à changer de place (10) sont saisies par dépression d'air et assemblées au moyen d'un ou de plusieurs dispositif(s) rotatif(s) et pivotant(s) (21) en liaison avec un nombre de suceurs (12) disposés dans une surface plane, dans lequel les suceurs (12) sont fixés sur une traverse (11), que les dispositifs (21) sont reliés de façon rotative et pivotante à une colonne de levage (4), et que les dispositifs (21) sont déplaçables horizontalement dans la zone de position à saisir des plaques de verre (10), **caractérisé en ce que**
a) la colonne de levage (4) présente une compensation de poids (5) actionnée à l'air comprimé pour la compensation du poids à déplacer de dispositifs (21),
b) les plateaux (25) des suceurs (12) sont inclinables dans toutes les directions dans leur support sous la charge d'un ressort et sont munis d'un élément de filtre (27), et
c) les suceurs (12) peuvent être soumis chacun séparément à une dépression réglable et peuvent être connectés au choix.

2. Dispositif selon la revendication 1, **caractérisé en ce que** la position et/ou la vitesse des plaques de verre (10) sont détectées par des capteurs et les signaux de ceux-ci sont traités par une technique de commande.

3. Dispositif selon l'une quelconque des revendications précédentes, **caractérisé en ce que** la compensation de poids (5) est réglable en continu.

4. Dispositif selon l'une quelconque des revendications précédentes, **caractérisé en ce que** la résistance de passage d'un élément de filtre (27) est détectée et affichée.

5. Procédé pour changer la position de plaques de verre de grande surface au repos ou en mouvement, avec les caractéristiques suivantes:
a) on détecte les dimensions d'une plaque de verre déterminée (10) au moyen de capteurs;
b) on détermine la vitesse de la plaque de verre (10) et l'instant du contact d'une plaque de verre (10) avec un ou plusieurs dispositif(s) (21), dans lequel un dispositif (21) est respectivement relié à un nombre de suceurs (12) disposés dans une surface plane,
c) on raccorde les dispositifs (21) à la plaque de verre respective (10) par dépression au moyen de suceurs (12), dans lequel la configuration des suceurs utilisés (12) est choisie en relation avec la grandeur de la plaque de verre (10) par la connexion des suceurs correspondants (12),
d) on soulève et on fait pivoter la plaque de verre respective (10) selon la demande existante au moyen d'un ou de plusieurs dispositifs (21), dans lequel on relativise le poids du dispositif au moyen d'une compensation de poids (5), et
e) on dépose la plaque de verre (10) au lieu de destination et on libère les suceurs (12).

6. Procédé selon la revendication 5, **caractérisé en ce que** la compensation de poids (5) est réglable en continu.

7. Procédé selon la revendication 5 ou 6, **caractérisé en ce que** plusieurs dispositifs sont disposés l'un derrière l'autre et sont pilotés par une commande commune.

8. Programme informatique avec un code de programme pour la mise en oeuvre des étapes de procédé selon l'une quelconque des revendications 5 à 7, lorsque le programme est exécuté sur un ordinateur.

9. Support lisible en machine avec le code de programme d'un programme informatique pour la mise en oeuvre du procédé selon l'une quelconque des revendications 5 à 7, lorsque le programme est exécuté sur un ordinateur.
